(19) Europäisches Patentamt
European Patent Office
Office européen des brevets

(11) Veröffentlichungsnummer: **0 015 315**
**B1**

# (12) EUROPÄISCHE PATENTSCHRIFT

(45) Veröffentlichungstag der Patentschrift: **27.07.83**

(51) Int. Cl.³: **C 01 B 33/18**

(21) Anmeldenummer: **79104898.6**

(22) Anmeldetag: **04.12.79**

## (54) Verfahren zur Herstellung von Kieselsäure mittels Flammenhydrolyse.

(30) Priorität: **05.02.79 DE 2904199**

(43) Veröffentlichungstag der Anmeldung: **17.09.80 Patentblatt 80/19**

(45) Bekanntmachung des Hinweises auf die Patenterteilung: **27.07.83 Patentblatt 83/30**

(84) Benannte Vertragsstaaten: **AT BE CH DE FR GB IT LU NL SE**

(56) Entgegenhaltungen:
**CH-A-221 309**
**DE-A-1 667 765**
**DE-A-2 153 671**
**DE-A-2 337 495**
**DE-C-948 415**
**DE-C-952 891**
**DE-C-1 212 047**
**US-A-1 967 235**
**US-A-2 488 440**
**US-A-2 990 249**
**US-A-3 130 008**
**US-A-3 660 025**

(73) Patentinhaber: **Degussa Aktiengesellschaft, Weissfrauenstrasse 9, D-6000 Frankfurt am Main 1 (DE)**

(72) Erfinder: **Schwarz, Rudolf, Dr., Faunusstrasse 2, D-8755 Alzenau 2 (DE)**
Erfinder: **Kleinschmit, Peter, Dr., Wildaustrasse 19, D-6450 Hanau 9 (DE)**

EP 0 015 315 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Kieselsäure mittels Flammenhydrolyse

Es ist bekannt, Kieselsäure auf pyrogenem Wege herzustellen indem man z. B. Siliziumtetrachlorid einer Flammenhydrolyse unterwirft. Kieselsäuren dieser Art sind z. B. die unter der Bezeichnung Aerosil® auf dem Markt befindlichen unterschiedlichen Kieselsäuretypen. Sie weisen unterschiedliche Teilchengrößen im Bereich von 7—40 nm auf und können infolgedessen für die unterschiedlichsten Anwendungszwecke, wie z. B. Verdickung von flüssigen Systemen, eingesetzt werden.

Als typische Kenngröße wird in der Regel nicht die Teilchengröße, sondern die spezifische Oberfläche in $m^2/g$ gemessen nach BET angegeben. Sofern es sich um porenfreie Kieselsäuren handelt, korrelieren diese beiden Größen eng miteinander.

Eine ebenso wichtige Kenngröße ist die Verdickungswirkung der verschiedenen Kieselsäuretypen in flüssigem System, weil der überwiegende Teil dieser Kieselsäuretypen als Verdickungs- und Thixotropierungsmittel eingesetzt werden.

Diese Kenngröße steht in Abhängigkeit von der BET-Oberfläche, so daß bei den bekannten Kieselsäuretypen, welche mittels einer Flammenhydrolyse hergestellt werden, einer bestimmten spezifischen Oberfläche auch eine bestimmte Verdickungswirkung zugeschrieben werden kann.

Eine derartige Korrelation wird in der Graphik gemäß Fig. 1 dargestellt.

Bei den bekannten Verfahren der Flammenhydrolyse von Siliziumhalogenverbindungen in einer Wasserstoffflamme werden — gezeigt am Beispiel der Hydrolyse von Siliziumtetrachlorid — Luft bzw. Sauerstoff, Wasserstoff und Siliziumtetrachlorid in einem solchen Verhältnis zueinander gemischt und abgebrannt, daß einerseits der Wasserstoff vollständig unter Bildung von Wasserdampf verbrennen und das Siliziumtetrachlorid andererseits quantitativ unter Bildung von $SiO_2$ mit dem gebildeten Wasserdampf reagieren kann. Die nacheinander bzw. nebeneinander ablaufenden Reaktionen können durch die Gleichungen 1, 2 und 3 wiedergegeben werden:

$$2\,H_2 + O_2 \longrightarrow 2\,H_2O \qquad (1)$$

$$\underline{2\,H_2O + SiCl_4 \longrightarrow SiO_2 + 4\,HCl} \qquad (2)$$

$$2\,H_2 + O_2 + SiCl_4 \longrightarrow SiO_2 + 4\,HCl \qquad (3)$$

Als anorganische Chlorsilane sind beispielsweise $SiHCl_3$, $SiCl_2H_2$, $SiCl_4$ und als organische Chlorsilane $CH_3SiCl_3$, $(CH_3)_2SiCl_2$, $(CH_3)_3SiCl$, $CH_3-CH_2-SiCl_3$ oder $(CH_3-CH_2)_2SiCl_2$ einsetzbar.

Die Komponenten Wasserstoff, Sauerstoff bzw. Luft und Siliziumtetrachlorid werden zur Durchführung der Verbrennungshydrolyse einem Brenner des Typs, wie er in der US-A-2 990 249 schematisch gezeichnet ist, getrennt oder vorgemischt zugeführt und an der Brenneraustrittsöffnung abgebrannt. Die Menge Wasserstoff ist so berechnet, daß sie unter Wasserdampfbildung für eine quantitative Reaktion der Chloratome am Siliziumatom unter Bildungen von Chlorwasserstoff ausreicht. Ein geringer Überschuß gewährleistet, daß der Reaktionsablauf nicht nur quantitativ, sondern auch ausreichend rasch erfolgt. Es ist nicht möglich, den Wasserstoffüberschuß, bezogen auf die Siliziumtetrachlorid-Menge beliebig hoch anzusetzen. Unabhängig davon, daß diese Maßnahme die Verfahrenskosten unnötig verteuern würde, sind der Höhe des Wasserstoffüberschusses dadurch Grenzen gesetzt, daß diese Reaktionskomponente nicht nur die für die Hydrolyse des Chlorids erforderliche Komponente, sondern auch den Energielieferant darstellt. Eine zu große Erhöhung des Wasserstoffüberschusses würde bewirken, daß die Temperatur der Flamme mit nachteiligen Folgen für die Qualität der $SiO_2$-Reaktionsprodukte ansteigt. Es ist möglich, die Reaktionstemperatur durch Zugabe von überstöchiometrischen Mengen Luft bzw. Sauerstoff zu dem Reaktionsgemisch abzusenken. Mit dieser Maßnahme wird üblicherweise die Reaktionstemperatur beeinflußt und damit die Feinteiligkeit bzw. die spezifische Oberfläche der Reaktionsprodukte festgelegt. Dieser Möglichkeit sind aber Grenzen gesetzt, weil die Ausstromgeschwindigkeit aus der Brenneraustrittsöffnung sich in relativ engen Grenzen bewegen muß und somit die Erhöhung der Inertgasmenge zu Lasten der Anlagenleistung geht.

Das bekannte Verfahren zur Herstellung von Kieselsäuren mittels Flammenhydrolyse gemäß US-A-2 990 249 weist nun den Nachteil auf, daß es mit ihm nicht gelingt, die Korrelation zwischen spezifischer Oberfläche und Verdickungsverhalten zu verändern und die Verdickungswirkung der Kieselsäure unabhängig von dem Wert der spezifischen Oberfläche einzustellen.

Gegenstand der Erfindung ist ein Verfahren zur Veränderung der Korrelation von spezifischer Oberfläche und Verdickungsverhalten bei der Herstellung von Kieselsäure mittels Flammenhydrolyse unter Verwendung von Chlorsilanverbindungen als Ausgangssubstanzen, wobei man die Verdickungswirkung der Kieselsäure unabhängig von dem Wert der spezifischen Oberfläche einstellen kann, welches dadurch gekennzeichnet ist, daß man in das Reaktionsgemisch zusätzliche Mengen an Wasserdampf, welche nicht aus der Verbrennung von für die Flammenhydrolyse notwendigen Wasserstoff enthaltenden Gasen resultieren, einführt, wobei die Einmischung möglichst rasch und homogen erfolgt, damit sich der Einfluß des zusätzlichen Wasserdampfes auf das Reaktionsgeschehen und die Bildung der Kieselsäure voll auswirken kann.

Die Einführung des zusätzlichen Wasserdampfes kann auf verschiedene Art und Weise vorgenommen werden. So kann man den zusätzlichen Wasserdampf über eine separate Leitung in die Mischkammer des Brenners leiten. In einer anderen bevorzugten Variante des erfindungsgemäßen Verfahrens kann man den zusätzlichen Wasserdampf in die Wasserstoff- bzw. die Luftzuführung zu dem Brenner einführen und somit ein Wasserstoff/Wasserdampf-Gemisch bzw. ein Luft/Wasserdampf-Gemisch dem Brenner zuführen. Zur Vermischung mit Wasserdampf kann man den Wasserstoff bzw . das sauerstoffhaltige Gas bei einer Temperatur von 20°C bis zur Siedetemperatur des Wassers durch einen Wasserverdampfer leiten.

In einer weiteren bevorzugten Variante kann man den zusätzlichen Wasserdampf den gasförmigen Chlorsilanen vor deren Eintritt in den Brenner zumischen, wobei die Temperatur des Gemisches aus Chlorsilan oberhalb des Taupunktes gehalten werden muß, um Kieselsäureabscheidungen zu vermeiden.

In einer weiteren bevorzugten Variante des erfindungsgemäßen Verfahrens kann man den zusätzlichen Wasserdampf auch in die Flamme, den Ort der eigentlichen Kieselsäurebildung einleiten. Dies kann mittels einer Sonde geschehen, die man axial durch den Brenner hindurchführt und aus der Brenneraustrittsöffnung herausragen läßt. Wesentlich ist nur, daß die Einmischung möglichst rasch und homogen erfolgt, damit sich der Einfluß des zusätzlichen Wasserdampfes auf das Reaktionsgeschehen und die Bildung der Kieselsäure voll auswirken kann, denn der Einfluß des Wasserdampfpartialdruckes nimmt mit dem Abstand von der Brenneraustrittsöffnung ab. Am Ausgang des sogenannten Flammrohres, einer Wärmetauscherzone, in welcher die Flammengase für gewöhnlich eingeleitet werden, ist kein Einfluß mehr auf die Eigenschaftsbildung der Kieselsäure bei Einmischung von zusätzlichen Wasserdampfmengen feststellbar.

Die zugemischte Wasserdampfmenge kann man in weiten Grenzen variieren.

Vorzugsweise wird der Wasserdampf mit einer Temperatur von 150 bis 250°C und einem Druck von 10 bis 20 atü insbesondere mit einer Temperatur von 185 bis 210°C und einem Druck von 12 bis 18 atü eingeführt.

Als Ausgangssubstanzen können alle bekannten anorganischen oder/und organischen Chlorsilanverbindungen eingesetzt werden.

Das Verhältnis von Wasserdampf zu Ausgangssubstanz kann von 0,1 kg bis 1 kg Wasserdampf pro kg Ausgangssubstanz betragen.

In einer weiteren Ausführungsform der Erfindung kann man statt reinem Wasserstoff z. B. Kohlenwasserstoff als Brenngas einsetzen. Derartige Kohlenwasserstoffe können z. B. Propan und/oder Butan sein.

Als Brenner kann man eine Vorrichtung verwenden, wie sie in der US-A-2 990 249 dargestellt wird. Es ist aber auch die Verwendung eines geschlossenen Brennersystems, bei welchem keine Sekundärluft in die Flamme eindringen kann, möglich.

Die Steuerbarkeit der Verdickungswirkung ergibt sich aus den beigefügten Zeichnungen. Es zeigt

Fig. 1 die Abhängigkeit der Verdickungswirkung von der BET-Oberfläche bei bekannten Kieselsäuren,

Fig. 2 die Abhängigkeit der Verdickungswirkung von der eingegebenen Wasserdampfmenge in Korrelation zu der BET-Oberfläche bei Kieselsäuren, die gemäß dem erfindungsgemäßen Verfahren hergestellt werden, wobei der zusätzliche Wasserdampf in die Reaktionsmischung vor der Brennkammer zugegeben wird,

Fig. 3 die Abhängigkeit der Verdickungswirkung von der eingegebenen Wasserdampfmenge in Korrelation zu der BET-Oberfläche bei Kieselsäuren, die gemäß dem erfindungsgemäßen Verfahren hergestellt werden, wobei der zusätzliche Wasserdampf in die Brennerflamme zugegeben wird.

Gemäß der Fig. 1 wird die Abhängigkeit der Verdickungswirkung von der BET-Oberfläche bei Kieselsäuren graphisch dargestellt, welche nach bekannten Verfahren hergestellt wurden. Für die einzelnen Kieselsäuren ergeben sich die folgenden Werte:

| Oberfläche | Verdickung |
|---|---|
| 130 $m^2/g$ | 2000 mPas |
| 150 $m^2/g$ | 2700 mPas |
| 200 $m^2/g$ | 3100 mPas |
| 300 $m^2/g$ | 3500 mPas |
| 380 $m^2/g$ | 3000 mPas |

Die genannten Verdickungswerte wurden aus einem Polyester-Bezugssystem ermittelt.

Dieses Polyester-Bezugssystem wird hergestellt, indem man 80 Gew.-Teile Ludopal® P 6 mit 11,4 Gew.-Teilen Monostyrol und 7 Gew.-Teilen Styrol, welches 1% Paraffin enthält, vermischt. Dieses System wird bei allen weiteren Verdickungsbestimmungen ebenfalls verwendet.

Gemäß der Fig. 2 verschiebt sich mit steigender zugeführter Wasserdampfmenge das gesamte Eigenschaftsbild insbesondere die spezifische Oberfläche und das Verdickungsverhalten der erhaltenen Kieselsäuren.

So zeigt die Kurve a) die Korrelation von spezifischer BET-Oberfläche mit dem Verdickungsverhalten von Kieselsäuren, wie sie bei bekannten Verfahren durch Variation des Luftüberschusses erhalten wird. Durch diese Maßnahme ist es also nur möglich, eine wie bereits in Fig. 1 dargestellte Eigenschaftskombination der Kieselsäuren zu erzielen.

Aus der Kurve b) läßt sich dagegen erkennen, daß sowohl das Verdickungsverhalten als auch die spezifische BET-Oberfläche der mittels dem erfindungsgemäßen Verfahren erhaltenen Kieselsäuren mit steigender Wasserdampfeinführung in die Reaktionsmischung vor der Verbrennung im Vergleich zu einer Grundeinstellung zunächst weit über die Werte, wie sie von den bekannten Kieselsäuren gemäß der Kurve a) bekannt sind, hinauslaufen, um dann mit größeren Wasserdampfmengen stark abzusinken, wobei neue Eigenschaftskombinationen erreicht werden. So ist es z. B. möglich, Kieselsäuren mit gleicher BET-Oberfläche aber stark unterschiedlichem Verdickungsverhalten herzustellen.

Gemäß der Fig. 3 verschiebt sich mit steigender zugeführter Wasserdampfmenge das gesamte Eigenschaftsbild, insbesondere die spezifische BET-Oberfläche und das Verdickungsverhalten, der erhaltenen Kieselsäuren.

So zeigt die Kurve a) die Korrelation von spezifischer BET-Oberfläche mit dem Verdickungsverhalten von Kieselsäuren, wie sie bei bekannten Verfahren durch Variation des Luftüberschusses erhalten wird. Durch diese Maßnahme ist es also nur möglich, wie bereits in den Fig. 1 und 2 ausgeführt, eine Eigenschaftskombination zu erzielen, bei der die Verdickungswirkung von der spezifischen BET-Oberfläche abhängig ist.

Aus der Kurve b) läßt sich dagegen erkennen, daß sowohl das Verdickungsverhalten als auch die spezifische BET-Oberfläche der mittels dem erfindungsgemäßen Verfahren erhaltenen Kieselsäuren mit steigender Wasserdampfeinführung in die Flamme im Vergleich zu einer Grundeinstellung völlig verschieden zu der den bekannten Kieselsäuren entsprechenden Kurve a) verlaufen. Dabei können neue Eigenschaftskombinationen erreicht werden.

So ist es z. B. möglich, Kieselsäuren mit gleicher BET-Oberfläche aber stark unterschiedlichem Verdickungsverhalten herzustellen.

Das erfindungsgemäße Verfahren wird anhand der folgenden Beispiele näher erläutert und beschrieben:

## Beispiel 1 (Vergleichsbeispiel)

6,2 kg Siliziumtetrachlorid werden verdampft und mit 2,2 $m^3$ Wasserstoff und 5,8 $m^3$ Luft in der Mischkammer eines Brenners vermischt. Das Gasgemisch brennt aus der Austrittsöffnung und wird mittels Unterdruck in das Kühlsystem eingesaugt. Nach der Abtrennung von dem Chlorwasserstoffhaltigen Gasgemisch erhält man 2,2 kg einer hochdispersen Kieselsäure, die eine spezifische Oberfläche von 200 $m^2/g$ und eine Verdickung eines Polyesterbezugssystemes von 3.100 mpascal aufweist.

## Beispiel 2

Man verfährt in gleicher Weise wie unter Beispiel 1 beschrieben, setzt aber zusätzlich zu den dort angegebenen Stoffen 0,5 kg Wasserdampf pro Stunde ein, die man in die Mischkammer des Brenners einleitet. Die Kieselsäure, die man erhält, weist eine spezifische Oberfläche von 466 $m^2$ und einen Verdickungswert von 3.910 mpascal auf.

## Beispiel 3

Man verfährt wie unter Beispiel 1, setzt aber zusätzlich 1,8 kg Wasserdampf pro Stunde, wie unter Beispiel 2 beschrieben, zu. Die Kieselsäure besitzt die Oberfläche von 277 $m^2/g$ und einen Verdickungswert von 1.040 mpascal.

Beispiel 4

Man verfährt wie unter Beispiel 1 beschrieben, führt aber mit einer Sonde 0,5 kg Wasserdampf pro Stunde in die Flammenachse ein, in einem Abstand von 1 cm von der Brenneraustrittsöffnung. Die Kieselsäure weist eine spezifische Oberfläche von 309 $m^2/g$ und einen Verdickungswert von 4.040 mpascal auf.

Beispiel 5

Man verfährt wie in Beispiel 1 und 4 beschrieben mit dem Unterschied, daß 3 kg Wasserdampf in die Flammenachse im Abstand von 10 cm von der Brenneraustrittsöffnung eingeblasen werden. Die erzielte BET der Kieselsäure liegt bei 212 $m^2/g$ und der Verdickungswert bei 1.105 mpascal.

Die Tabelle I umfaßt die ermittelten Werte der genannten Beispiele des erfindungsgemäßen Verfahrens.

Die Werte für die spezifische Oberfläche und die Verdickung entsprechen den Kurven b) in den Fig. 2 und 3.

Tabelle I

Verfahren gemäß Erfindung mit zusätzlichem Eintrag von Wasserdampf:

a) in die Reaktionsmischung vor der Verbrennung
b) in die Aerosilflamme

| Betriebseinstellungen $SiCl_4$ kg/h | $H_2$ $m^3/h$ | Luft $m^3/h$ | Wasserdampfeintrag kg/h | Oberfläche $m^2/g$ | Verdickung m Pascal | Verdickung, bezogen auf Standard % |
|---|---|---|---|---|---|---|
| a) in die Reaktionsmischung vor der Verbrennung | | | | | | |
| 6,2 | 2,2 | 5,8 | 1,2 | 391 | 2215 | 76 |
| 6,2 | 2,2 | 5,8 | 1,8 | 277 | 1040 | 36 |
| 6,2 | 2,2 | 5,8 | 0,8 | 441 | 2865 | 99 |
| 6,2 | 2,2 | 5,8 | 0,5 | 466 | 3910 | 135 |
| 6,2 | 2,2 | 5,8 | 0,2 | 226 | 3255 | 112 |
| 6,2 | 2,2 | 5,8 | 0,1 | 214 | 3060 | 106 |
| 6,2 | 2,2 | 5,8 | 0,02 | 196 | 3060 | 106 |
| b) in die Aerosilflamme | | | | | | |
| 6,2 | 2,2 | 5,6 | 0,8 | 348 | 3125 | 108 |
| 6,2 | 2,2 | 5,6 | 2,0 | 308 | 1605 | 58 |
| 6,2 | 2,2 | 5,6 | 3,0 | 212 | 1105 | 38 |
| 6,2 | 2,2 | 5,6 | 0,5 | 309 | 4040 | 139 |

**Patentanspruch**

Verfahren zur Veränderung der Korrelation von spezifischer Oberfläche und Verdickungsverhalten bei der Herstellung von Kieselsäure mittels Flammenhydrolyse, unter Verwendung von Chlorsilanverbindungen als Ausgangssubstanzen, wobei man die Verdickungswirkung der Kieselsäure unabhängig von dem Wert der spezifischen Oberfläche einstellen kann, dadurch gekennzeichnet, daß

man in das Reaktionsgemisch zusätzliche Mengen an Wasserdampf, welche nicht aus der Verbrennung von für die Flammenhydrolyse notwendigen Wasserstoff enthaltenden Gasen resultieren, einführt, wobei die Einmischung möglichst rasch und homogen erfolgt, damit sich der Einfluß des zusätzlichen Wasserdampfes auf das Reaktionsgeschehen und die Bildung von Kieselsäure voll auswirken kann.

**Claim**

A process for changing the correlation between specific surface and thickening behaviour in the production of silica by flame hydrolysis using chlorosilane compounds as starting materials, in which process it is possible to adjust the thickening effect of the silica independently of the specific surface value, characterised in that additional quantities of water vapour which do not result from the combustion of the hydrogen-containing gases necessary for flame hydrolysis are introduced into the reaction mixture, and intermixing is carried out as rapidly and as homogeneously as possible so that the influence of the additional water vapour on the reaction and the formation of silica may be completely effective.

**Revendication**

Procédé pour modifier la corrélation entre la surface spécifique et le pouvoir épaississant dans la fabrication d'acides siliciques par hydrolyse à la flamme, en utilisant des composés chlorosilane comme produits de départ, où l'on peut ajuster le pouvoir épaississant de l'acide silicique indépendamment de la valeur de la surface spécifique, procédé caractérisé en ce que l'on introduit dans le mélange réactionnel des quantités supplémentaires de vapeur d'eau, qui ne résultent pas de la combustion des gaz contenant l'hydrogène nécessaire pour l'hydrolyse à la flamme, l'opération de mélange s'effectuant de façon aussi rapide et homogène que possible, afin que l'influence de la vapeur d'eau supplémentaire puisse s'exercer complètement sur le déroulement de la réaction et la formation d'acide silicique.

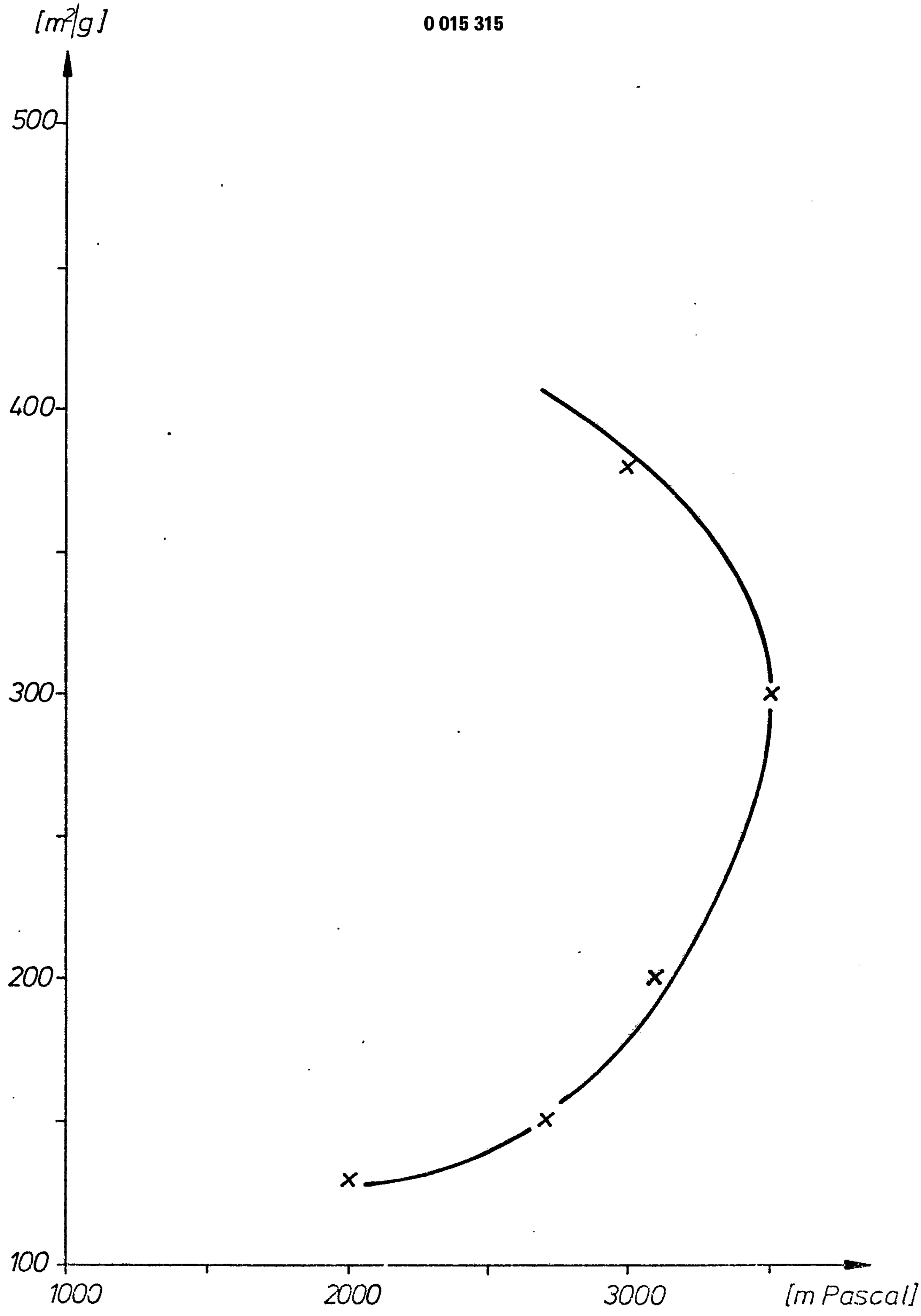


Fig. 1

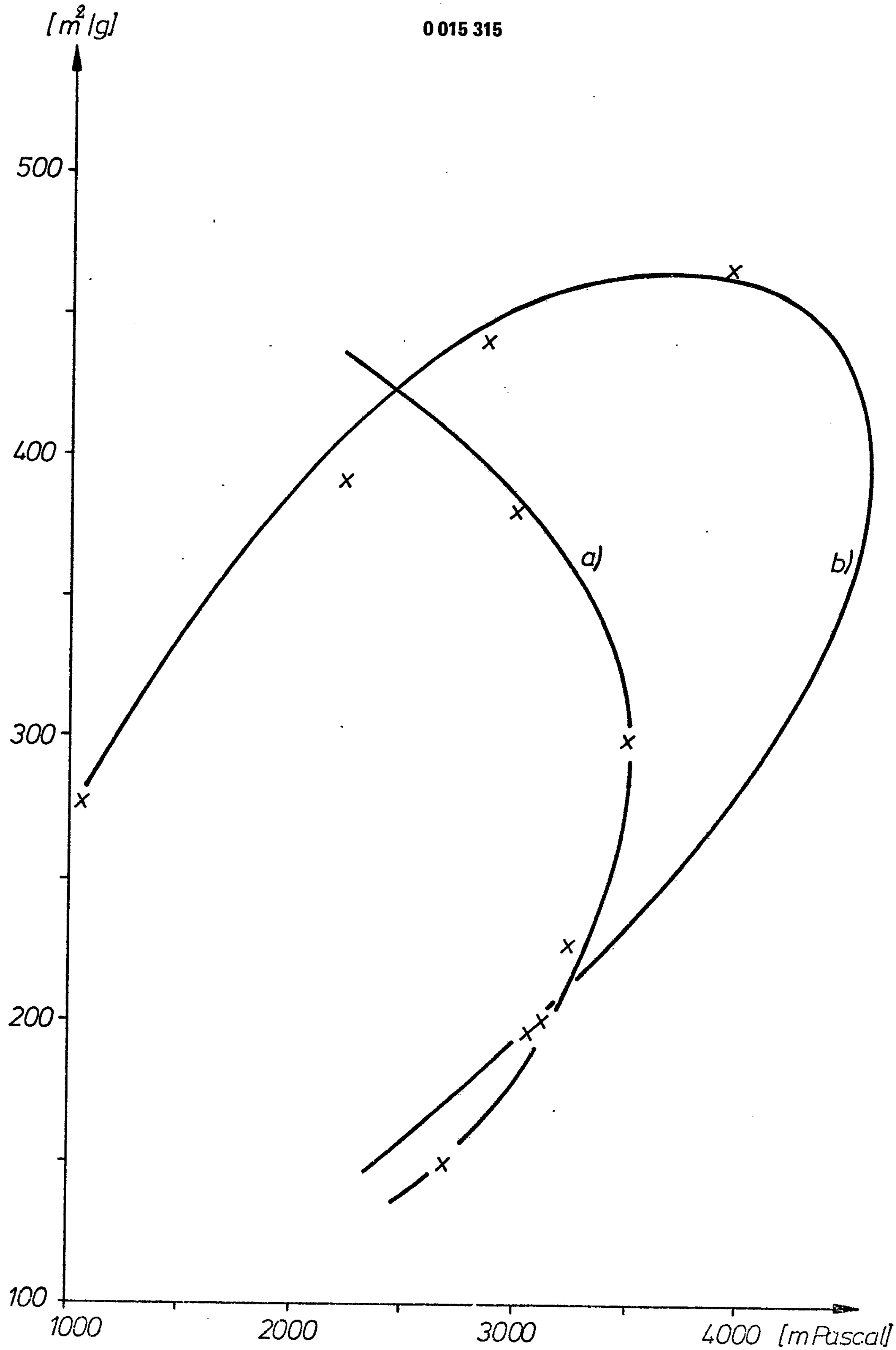




Fig.2

0 015 315

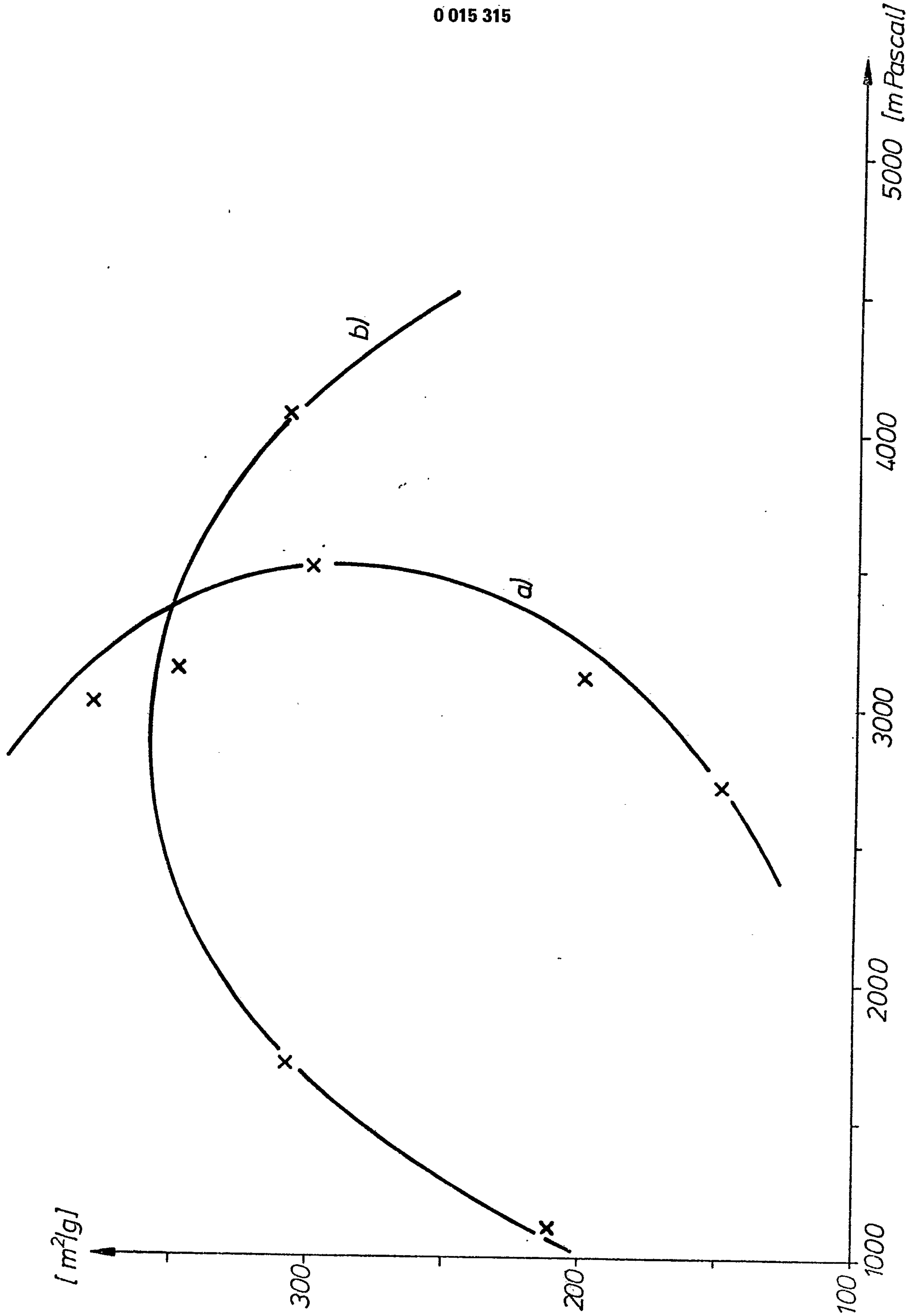


Fig. 3